# EUROPEAN PATENT SPECIFICATION

(11) **EP 0 649 989 B1**
(45) Date of publication and mention of the grant of the patent: **17.03.1999**
(21) Application number: 94307605.9
(22) Date of filing: 17.10.1994
(51) Int. Cl.: F16B 19/10

(54) **Blind rivet assembly**
Blindnieteeinheit
Ensemble de rivet aveugle

(30) Priority: 23.10.1993 GB 9321920
(43) Date of publication of application: 26.04.1995
(73) Proprietor: EMHART INC., Newark, Delaware 19711 (US)
(72) Inventor: Jones, Steven Victor, Great Barr, Birmingham, B43 5LN (GB)
(74) Representative: Dlugosz, Anthony Charles

(56) References cited:
- DE-A- 2 360 159
- FR-A- 1 276 014

## Description

The present invention relates to a blind rivet assembly comprising a hollow, flanged, tubular rivet body and a headed mandrel which is set by pulling the headed mandrel by means of a setting tool so that the head causes the rivet body to flare against the flange (DE-A-2 360 159). Further pulling then applied to the mandrel causes the mandrel to break at a predetermined weakened region near the head and continued pulling enables the mandrel to be removed from the rivet. The setting tool includes gripping jaws with serrated teeth which dig into the mandrel stem. If the teeth are filled with debris, then slippage can occur which impairs the effectiveness of the tool, even resulting in failure to set the rivet.

The grip of a setting tool on a mandrel can be enhanced by the provision of grooves in the mandrel but the mandrel may be seriously weakened thereby. This may cause the mandrel to break prematurely if, for example, the difference between the rivet setting load, governed by the depth of the weakened portion of the mandrel stem under the head, and the mandrel stem break load is small.

It is an object of the present invention to provide a blind rivet assembly wherein the mandrel is provided with enhanced grip for the setting tool without weakening the mandrel.

According to the present invention, we provide a blind rivet assembly comprising a hollow flanged rivet body and a headed, drawing mandrel, characterised in that the mandrel comprises a first stem section adjacent to the head of the mandrel and enclosed within the rivet body and a second exposed stem section extending from the end of the first stem section remote from the head, which second stem section is provided with a raised, multi-start helix form. By "multi-start" helix we mean a helix with at least four, preferably eight, starts. Preferably the raised helix form has a height of at least 0.05 millimetres above the diameter of the mandrel stem. The multi-start raised helix form may also be provided on that part of the mandrel stem adjacent the flange of the rivet body.

The raised helix form is applied to the mandrel stem after assembly and further to the present invention we provide a method of producing a blind rivet assembly by assembling a hollow flanged rivet body with a headed drawing mandrel characterised in that after assembly the headed mandrel is subjected to a treatment whereby a multi-start helix form is raised at least in that part of the mandrel stem remote from the rivet body.

The treatment of the mandrel stem may be effected by a rolling operation and this may be continued to provide a multi-start, raised helix form on that part of the stem adjacent the flange of the rivet body.

It is common practice to provide blind rivet assemblies with a protective coating after assembly and the method of the present invention has the advantage that it removes the coating from the mandrel stem effectively so that any tendency for setting tool jaws to clog is essentially avoided with the consequent improvement of the tool jaws life.

The raised form provides a means to enhance jaw tooth indentation so that the performance of the setting tool is improved whereby the compressive load required for jaw indentation is less than that required for a plain cylindrical form of mandrel thus improving resistance to jaw slip.

Provision of the raised helix form on that part of the mandrel stem adjacent the flange of the rivet body assists effective assembly by inhibiting any tendency for the mandrel to drop out of the rivet body or be forced out of the rivet body by inertia forces which may occur for instance in automatic blind rivet assembly delivery systems.

In order that the invention may be better understood, preferred embodiments will now be described in greater detail by way of example with reference to the accompanying drawings in which:-
Figure 1 is a side view of one embodiment of a rivet assembly according to the invention, and
Figure 2 is a side view of another embodiment of a rivet assembly according to the invention.

In the drawings, a hollow rivet body (3) having a flange (4) is assembled with a mandrel having a head (not shown) on a mandrel stem (5). The head of the mandrel is, of course, assembled within the hollow body (3) in a closed end rivet as illustrated and in the case of an open end rivet the head is visible beyond the plain cylindrical portion of the rivet body.

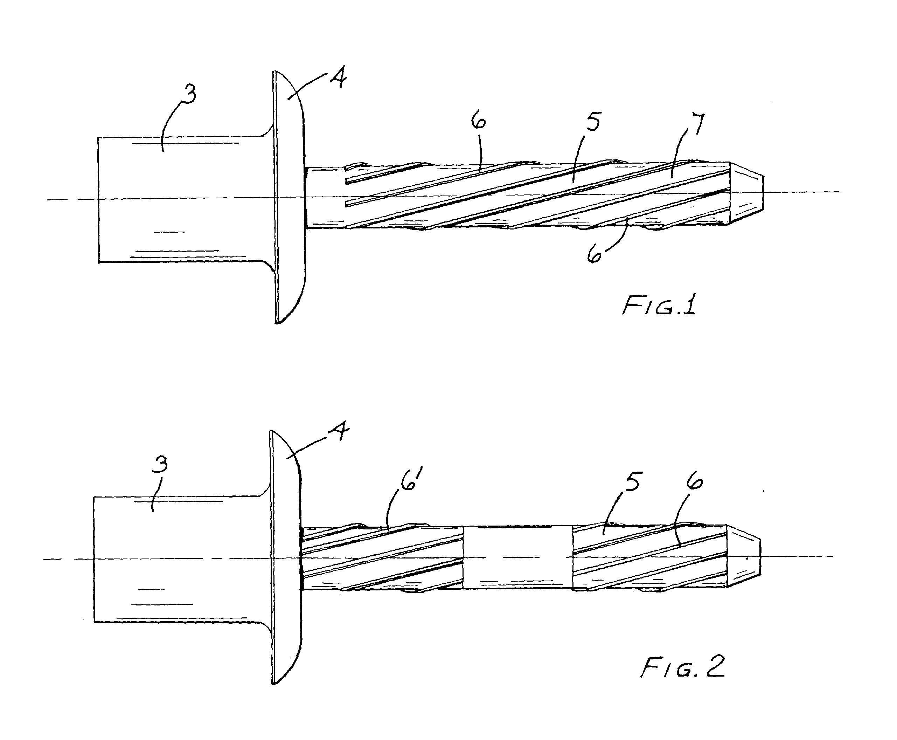

A series of eight raised helices (6) are formed on the tail (7) of the mandrel stem (5) remote from the flange (4) which is to be gripped by a setting tool. Figure 2 shows a blind rivet assembly where the raised helices (6') continue in the mandrel stem (5) right up to the flange (4).

The helix forms are produced on the mandrel after assembly of the rivet body and mandrel and if the assembly has been subjected to a coating process prior to, say rolling with paint or a corrosion preventative, forming the helices provides an efficient way of removing the coating efficiently from the mandrel and thereby reduces the possibility of contamination or clogging of the setting tool jaws. This consequently reduces the likelihood of jaw slips, which often leads to excessive jaw wear. This can make it necessary for an operator to use a second pull to set a rivet which adversely affects productivity.

The mandrels shown in the drawings have helices with a pitch of 25 mm with each start spaced by 1 mm, the height of each helix form being 0.05 mm above the diameter of the mandrel stem.

The raised helix form enables improved depth of jaw tooth indentation to be achieved due to the required compressive load being applied to a smaller exposed surface area by virtue of the raised form (which is less than that of the plain cylindrical form of the mandrel stem). Thus, for the same given compressive load applied by the setting tool, tooth penetration is deeper and jaw slip resistance is improved.

Since the use of the present invention reduces the problems associated with clogging of setting tools and jaws from coated mandrels, tool maintenance periods are also extended.

Alternatively, to obtain the equivalent jaw grip on the helix form as that for the plain cylindrical surface of the mandrel stem would require a lesser applied force by the setting tool giving longer tool life due to the lesser forces being involved.

The invention thus provides a blind rivet assembly with improved setting properties because the setting tool jaws are given a better grip on the mandrel stem and at the same time reduces problems of clogging and tool wear caused by residual coatings.

## Claims

1. A blind rivet assembly comprising a hollow, flanged rivet body (3) and a headed, drawing mandrel,
characterised in that the mandrel comprises a first stem section adjacent to the head of the mandrel and enclosed within the rivet body and a second exposed stem section extending from the end of the first stem section remote from the head, which second stem section is provided with a raised, multi-start helix form (6'6).

2. A blind rivet assembly according to Claim 1 characterised in that the multi-start helix form (6'6) is provided along that part of the mandrel stem (5) adjacent a flange (4) of the rivet body (3).

3. A blind rivet assembly according to Claim 1 or 2 characterised in that the multi-start helix (6'6) has at least four starts.

4. A blind rivet assembly according to Claim 1 or 2 characterised in that the multi-start helix (6'6) has at least eight starts.

5. A blind rivet assembly according to any one of the preceding claims characterised in that the raised helix form (6'6) has a height of at least 0.05 millimetres above the diameter of the mandrel stem (5).

## Patentansprüche

1. Bindnietanordnung, die einen hohlen, mit Flansch versehenen Nietkörper (3) und einen mit Kopf versehenen, ziehenden Dorn umfaßt,
**dadurch gekennzeichnet, daß**
der Dorn einen ersten Stielabschnitt in der Nähe des Kopfes des Dorns, und im Nietkörper umschlossen, sowie einen zweiten, exponierten Stielabschnitt umfaßt, der sich vom Ende des ersten Stielabschnittes vom Kopf entfernt erstreckt, wobei der zweite Stielabschnitt mit einer erhabenen, mehrgängigen Helixform (6'6) versehen ist.

2. Blindnietanordnung nach Anspruch 1, dadurch gekennzeichnet, daß die mehrgängige Helixform (6'6) entlang desjenigen Teils des Dornstiels (5) vorgesehen ist, der einem Flansch (4) des Nietkörpers (3) benachbart ist.

3. Blindnietanordnung nach Anspruch 1 oder 2, dadurch gekennzeichnet, daß die mehrgängige Helix (6'6) mindestens vier Gänge besitzt.

4. Blindnietanordnung nach den Anprüchen 1 oder 2, dadurch gekennzeichnet, daß die mehrgängige Helix (6'6) mindestens acht Gänge aufweist.

5. Blindnietanordnung nach irgendeinem der vorhergehenden Ansprüche, dadurch gekennzeichnet, daß die erhabene Helixform (6'6) eine Höhe von mindestens 0,05 mm über den Durchmesser des Dornstieles (5) hinaus besitzt.

## Revendications

1. Ensemble pour rivet aveugle comprenant un corps (3) de rivet bridé et creux et une broche de traction à tête, caractérisé en ce que la broche comprend une première section de tige adjacente à la tête de la broche et entourée par le corps de rivet et une deuxième section de tige exposée s'étendant depuis l'extrémité de la première section de tige éloignée de la tête, laquelle deuxième section de tige est munie d'une forme en hélice élevée à filetages multiples (6',6).

2. Ensemble selon la revendication 1, caractérisé en ce que la forme en hélice à filetages multiples (6',6) est prévue le long de la partie de la tige de broche (5) adjacente à une bride (4) du corps de rivet (3).

3. Ensemble selon la revendication lou 2, caractérisé en ce que l'hélice à filetages multiples (6',6) comprend au moins quatre filetages.

4. Ensemble selon la revendication 1 ou 2, caractérisé en ce que l'hélice à filetages multiples (6',6) comprend au moins huit filetages.

5. Ensemble selon l'une quelconque des revendications précédentes, caractérisé en ce que la forme en hélice élevée (6',6) a une hauteur d'au moins 0,05 mm au-dessus du diamètre de la tige de broche (5).
